# EUROPEAN PATENT APPLICATION

(11) **EP 4 808 165 A1**
(43) Date of publication of application: **16.09.2026**
(21) Application number: 26152112.4
(22) Date of filing: 15.01.2026
(51) Int. Cl.: H04W 4/02, H01M 10/00, H04W 4/029, H04W 4/50

(54) **BATTERY PACK PROCESS CONTROL APPARATUS AND METHOD**

(30) Priority: 12.03.2025 KR 20250032319
(71) Applicant: SAMSUNG SDI CO., LTD., Yongin-si, Gyeonggi-do 17084 (KR)
(72) Inventor: KIM, Min Su, 16678 Suwon-si (KR); KIM, Tae Ho, 16678 Suwon-si (KR)
(74) Representative: Marks & Clerk LLP

(57) **Abstract**

The present disclosure relates to a battery pack process control apparatus and method, and a technical problem to be solved is to effectively track a wireless battery management system (WBMS) by identifying a location and movement speed thereof in real time, and to accurately identify the WBMS (10). Thus, the present disclosure provides a battery pack process control apparatus (100), which transmits and receives signals for detecting a WBMS (10) moving along a production line, detects the WBMS (10) based on the transmitted signal and received signal of the communication unit (130), determines a location and speed of the WBMS (10), identifies and tracks the WBMS (10) in real time, and controls a designated program to be flashed to the WBMS (10) when the WBMS (10) reaches a designated flashing location, and a battery pack process control method.

## Description

### FIELD

The present disclosure relates to a battery pack process control apparatus and method for identifying and tracking a wireless battery management system (WBMS) of a battery pack.

### BACKGROUND

Recently, electric vehicles (xEVs) have been rapidly adopted worldwide as a means of responding to climate change and sustainable transportation, and the efficient management of a battery system, which is a core component of xEVs, has emerged as an important technical challenge.

A battery management system (BMS) is a core technology that monitors and controls the voltage, current, temperature, and the like of each cell inside a battery pack of a xEV to optimize the performance, lifetime, and safety of the battery pack.

Recently, a wireless battery management system (WBMS) technology has been attracting attention to overcome the limitations of conventional wired BMSs and has an advantage of reducing the complex wiring inside a battery pack, thereby reducing weight and facilitating maintenance.

However, in order to introduce the WBMS, it is necessary to automate a process of accurately identifying each WBMS module, flashing necessary software, and pairing the WBMS modules with other modules during a manufacturing process. Therefore, a method of automatically identifying and flashing WBMS modules through an automated process is requiredy.

The herein information disclosed in this Background section is for enhancement of understanding of the background of the present disclosure, and therefore, it may contain information that does not constitute related (or prior) art.

### SUMMARY

The present disclosure is directed to providing a battery pack process control apparatus and method, which accurately identify and track a wireless battery management system (WBMS) mounted on a battery pack during a manufacturing process of the battery pack.

However, objects that the present disclosure intends to achieve are not limited to the herein-described objects and other objects that are not described may be clearly understood by those skilled in the art from the following description.

According to aspects of the present disclosure for solving the herein technical problem, there is provided a battery pack process control apparatus including: a communication unit that transmits and receives signals for detecting a WBMS moving along a production line; and a processor that detects the WBMS based on the transmitted signal and received signal of the communication unit, determines a location and speed of the WBMS, identifies and tracks the WBMS in real time, and controls a designated program to be flashed to the WBMS when the WBMS reaches a designated flashing location.

According to the present disclosure, the processor may calculate the speed of the WBMS based on a frequency difference between the transmitted signal and the received signal using the Doppler effect, and calculate a location of the WBMS based on the speed.

According to the present disclosure, the processor may calculate a distance to the WBMS by computing a time delay between the transmitted signal and the received signal and identify the WBMS by matching the speed, the distance, and a direction of the WBMS with a pre-stored profile.

According to the present disclosure, the processor may analyze the received signals based on an artificial intelligence model to classify the WBMS as either a master WBMS or a slave WBMS and predict the movement of the WBMS.

According to the present disclosure, the processor may classify the type of WBMS using a deep neural network (DNN) and predict the movement of the WBMS based on a long short-term memory (LSTM) network.

According to the present disclosure, the processor may transmit a preparation signal to a flashing device to prepare for flashing before the WBMS reaches the designated flashing location so that when the WBMS reaches the flashing location, the program is flashed to the WBMS.

According to the present disclosure, the processor may compare a predicted value and a measured value for the location of the WBMS to calculate an error and determine that a flashing error has occurred in the WBMS when the error is greater than a set value.

According to the present disclosure, the processor may stop the flashing when the WBMS is determined to have an error and may separately classify and retest the WBMS.

According to the present disclosure, the processor may count a number of undetected WBMSs and falsely detected WBMSs among a plurality of WBMSs and calculate an undetected rate and a false detection rate, and a setting of a manufacturing process including the production line may be changed when one or more of the undetected rate and the false detection rate exceed a reference value.

According to the present disclosure, the processor may correct one or more of a change in characteristics of a wireless signal including temperature, threshold values referenced for detecting the WBMS based on a speed of the production line, electromagnetic interference, and multipath interference of the received signal.

According to the present disclosure, the processor may store data on identification information of the WBMS, a flashing process, and error occurrences in real time, and periodically stores data on a manufacturing process to evaluate performance of a system and calculate a productivity index to manage the manufacturing process.

According to the present disclosure, there is provided a battery pack process control method including: controlling, by a processor, a communication unit to transmit and receive signals to detect a WBMS moving along a production line; determining, by the processor, a location and speed of the WBMS by detecting the WBMS based on the transmitted signal and the received signal; identifying and tracking, by the processor, the WBMS in real time; and controlling, by the processor, a designated program to be flashed to the WBMS when the WBMS reaches a designated flashing location.

According to the present disclosure, in the determining of the location and speed of the WBMS, the processor may calculate the speed of the WBMS based on a frequency difference between the transmitted signal and the received signal using the Doppler effect and calculate the location of the WBMS based on the speed.

According to the present disclosure, in the identifying and tracking of the WBMS in real time, the processor may calculate a distance to the WBMS by computing a time delay between the transmitted signal and the received signal and identify the WBMS by matching the speed, the distance, and a direction of the WBMS with a pre-stored profile.

According to the present disclosure, in the identifying and tracking of the WBMS in real time, the processor may analyze the received signal based on an artificial intelligence model to classify the WBMS as either a master WBMS or a slave WBMS, and predict the movement of the WBMS.

According to the present disclosure, in the controlling of the designated program to be flashed to the WBMS, the processor may transmit a preparation signal to a flashing device to prepare for flashing before the WBMS reaches the designated flashing location, and control a signal to be transmitted through the communication unit when the WBMS reaches the flashing location.

According to the present disclosure, the battery pack process control method may further include: comparing, by the processor, a predicted value and a measured value for the location of the WBMS, and calculating an error; determining, by the processor, that a flashing error has occurred in the WBMS when the error is greater than a set value; and stopping, by the processor, the flashing when the WBMS is determined to have an error and separately classifying and retesting the WBMS.

According to the present disclosure, the battery pack process control method may further include: counting, by the processor, a number of undetected WBMSs and falsely detected WBMSs among a plurality of WBMSs to calculate an undetected rate and a false detection rate; and changing, by the processor, a setting of a manufacturing process including the production line when one or more of the undetected rate and the false detection rate exceed a reference value.

According to the present disclosure, in the changing of the setting of the manufacturing process, the processor may correct one or more of a change in characteristics of a wireless signal including temperature, threshold values referenced for detecting the WBMS based on a speed of the production line, electromagnetic interference, and multipath interference of a reflected signal.

According to the present disclosure, there is provided a battery pack process control apparatus including: a communication unit that transmits and receives signals for detecting a WBMS moving along a production line; a phased array antenna connected to the communication unit for transmitting signals and receiving reflected signals; and a processor that detects the WBMS based on the transmitted signal and received signal of the communication unit, determines a location and speed of the WBMS, identifies and tracks the WBMS in real time, and controls a designated program to be flashed to the WBMS when the WBMS reaches a designated flashing location, wherein the processor performs adaptive beamforming by computing complex weights for each element of the antenna and maximizing a target signal-to-interference-plus-noise ratio (SINR).

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram illustrating a configuration of a process control apparatus for identifying and tracking a wireless battery management system (WBMS) used for a battery pack manufacturing process according to embodiments of the present disclosure;
FIG. 2 is a block diagram schematically illustrating a control configuration of a process control device according to embodiments of the present disclosure;
FIG. 3 is a flowchart illustrating a process of identifying and tracking a WBMS according to embodiments of the present disclosure;
FIG. 4 is a view for describing a process of identifying a WBMS according to embodiments of the present disclosure; and
FIG. 5 is a flowchart illustrating a process control method for identifying and tracking a WBMS according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

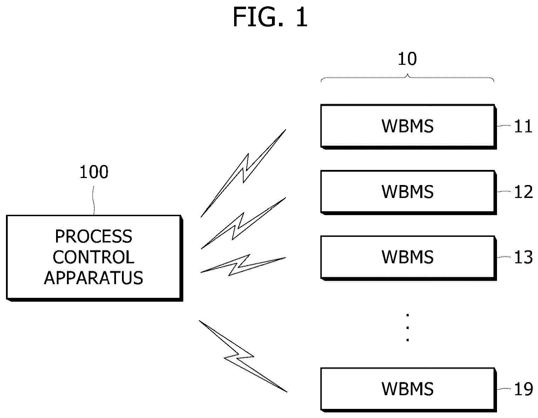

FIG. 1 is a block diagram illustrating a configuration of a process control apparatus for identifying and tracking a wireless battery management system (WBMS) in a battery pack manufacturing process according to embodiments of the present disclosure.

Referring to FIG. 1, the battery pack process control apparatus (hereinafter, a process control apparatus) 100 according to the embodiment of the present disclosure identifies and tracks a WBMS 10 included in a battery pack during a battery pack manufacturing process.

The process control apparatus 100 identifies a plurality of WBMSs 11 to 19 moving along a production line, calculates their locations to control a designated program to be flashed. Here, "flashing" refers to the installation and storage of a program or data into a memory of the WBMS 10, which may primarily be used to install the operating system software of the WBMS 10 into a read-only memory (ROM).

The process control apparatus 100 may identify each WBMS 10 by using the Doppler effect, taking into account the wireless signal interference and noise generation of the WBMSs 10.

The process control apparatus 100 may distinguish between a master WBMS and a slave WBMS among the plurality of WBMSs 10 and control so that the master WBMS and the slave WBMS are flashed with designated programs. In this case, the master WBMS and the slave WBMS are manufactured on different production lines, but the area for detecting signals may include multiple production lines, and signal interference may occur during wireless communication. Accordingly, the process control apparatus 100 may distinguish between the master WBMS and the slave WBMS and control flashing for the slave WBMS.

In addition, the process control apparatus 100 may detect failures in the plurality of WBMSs 10 and control the process so that the WBMS 10 in which the failure is detected is separately classified and retested.

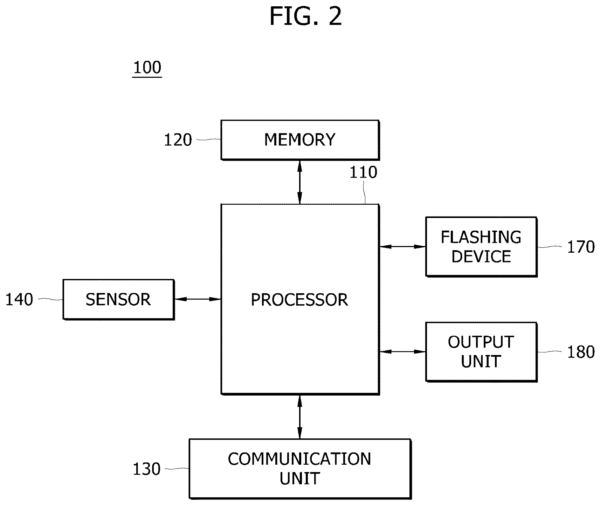

FIG. 2 is a block diagram schematically illustrating a control configuration of a process control device according to embodiments of the present disclosure.

Referring to FIG. 2, the process control apparatus 100 may include a memory 120, a communication unit 130, a sensor 140, a flashing device 170, an output unit 180, and a processor 110.

The memory 120 may store process control data, identification data and location data for the plurality of WBMSs 11 to 19, sensor data, and failure diagnostic data. The memory 120 may store data for one or more of a process control algorithm, a signal analysis algorithm, an identification algorithm, a location determination algorithm, a tracking algorithm, a flashing control algorithm, and a failure diagnosis algorithm. The memory 120 may include a non-volatile memory such as a random access memory (RAM), ROM, an electrically erasable programmable ROM (EEPROM), etc., a flash memory, or another storage means such as a hard disk drive (HDD), a solid-state drive (SSD), and a software-defined storage (SDS), etc.

The communication unit 130 transmits and receives signals of a predetermined frequency for identifying the plurality of WBMSs 11 to 19 according to a control command of the processor 110. In addition, the communication unit 130 may receive sensor data from the sensor 140 and transmit control signals to the flashing device 170. For example, the communication unit 130 may transmit and receive signals of a main frequency of 2.4 GHz and an auxiliary frequency of 915 MHz to improve obstacle penetration. A transmission power of the communication unit 130 may be set to a maximum of 100Mw and a receiving sensitivity may be set to -100dBm. The communication unit 130 may be connected to an 8x8 phased array antenna. In addition, the communication unit 130 includes a plurality of communication modules and may transmit and receive data using at least one of a short-range communication method such as Ethernet, WiFi, Bluetooth, mobile communication, controller area network (CAN) communication, local interconnect network (LIN) communication, and serial communication.

The sensor 140 may be installed in a production line and detect the WBMS 10. The sensor 140 may detect the WBMS 10 when the WBMS 10 reaches a designated location while moving along the line. For example, the sensor 140 may detect the WBMS 10 when the WBMS 10 reaches a flashing location and transmit a detection signal to the processor 110. For example, the sensor 140 may include one or more of a distance sensor, a proximity sensor, and a location sensor. In addition, the sensor 140 may detect the temperature and humidity of the production line. The sensor 140 may measure the temperature of a space in which the production line is installed and transmit the measured temperature to the processor 110.

The flashing device 170 may install a program on the WBMS 10 that reaches a designated location in response to the control command of the processor 110. For example, the flashing device 170 may flash an operating system into a ROM of the WBMS 10.

The output unit 180 outputs a progress state of the manufacturing process. The output unit 180 may include one or more of a display, an operation lamp, and a speaker. The output unit 180 may output whether the process is normal in response to the control command of the processor 110 and output a warning when an abnormality or failure occurs. The output unit 180 may output one or more of a sound effect, a warning sound, and voice guidance through a speaker, output one or more of a state light, an operation light, and a warning light through an operation lamp, and output one or more of state information, a state message, failure information, a failure message, a warning message, and warning information through a display.

The processor 110 may include one or more microprocessors. The processor 110 may control the process based on data stored in the memory 120 and may control the flashing device 170 to install a designated program on the WBMS 10. For example, a quad-core processor may be used as the processor 110. In addition, the processor 110 may include a field programmable gate array (FPGA) and an analog-to-digital converter (ADC).

The processor 110 may transmit and receive signals of a predetermined frequency through the communication unit 130, analyze the received signals based on an artificial intelligence model to calculate the locations of the plurality of WBMSs 11 to 19, and identify each WBMS. The processor 110 may store information about the WBMS 10 and track a location thereof to update location information. The processor 110 may use the Doppler effect to calculate locations of each WBMS 10 from a Doppler frequency shift and to calculate the moving speed to track the movement of the WBMS 10. In addition, the processor 110 corrects signals received through multiple routes for electromagnetic interference and estimates an angle at which the signals arrive to restore the signals.

The processor 110 distinguishes between the master WBMS and the slave WBMS based on identification information of the WBMS 10 and controls flashing to be performed on the slave WBMS.

The processor 110 may track a location of the WBMS 10 and control the flashing device 170 to operate when the WBMS 10 reaches a designated flashing location. In addition, the processor 110 may determine a process state based on the sensor data input from the sensor 140 and detect the location of the WBMS 10 from the sensor 140. In this case, the processor 110 may detect an error between a predicted value of the WBMS 10 and a measured value of the sensor 140 through location tracking, and when the error is greater than or equal to a set value, it may be determined as a location prediction error.

The processor 110 monitors information about the progress of the process in real time and may output the state information through the output unit 180.

The processor 110 may detect an error in the manufacturing process of the WBMS 10 based on a Kalman filter-based predictive model and data measured in real time. When the error is detected, the processor 110 may maintain or stop the production line depending on the type of error detected. For example, when the processor 110 detects a flashing error, flashing for WBMS 10 stops, and re the WBMS 10 is retested after classified as an error WBMS. The processor 110 may generate an alert when an error is detected and output the alert through the output unit 180. In addition, the processor 110 may separately classify the corresponding WBMS when the error is detected, exclude the corresponding WBMS from the flashing operation, and retest the corresponding WBMS.

Accordingly, the process control apparatus 100 may identify and distinguish the WBMS 10, optimize the manufacturing process, accurately control the high-speed production line, and improve the quality of the WBMS.

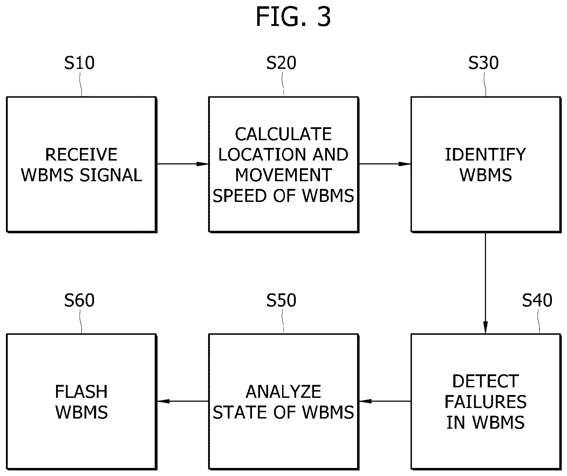

FIG. 3 is a flowchart illustrating a process of identifying and tracking a WBMS according to embodiments of the present disclosure.

Referring to FIG. 3, the process control apparatus 100 may transmit signals of a predetermined frequency through the communication unit 130 and receive reflected signals by the WBMS 10 (S10). The process control apparatus 100 may transmit signals to the WBMS 10 and receive the reflected signals by the WBMS 10 using an RF antenna installed at an upper portion of the production line.

In this case, the production line moves at about 1 m/sec, and WBMSs 10 may be disposed at a 30 cm interval. The WBMS 10 is a slave WBMS and may move while mounted on a battery module. The WBMS 10 may also include a master WBMS, but the master WBMS and the slave WBMS are produced on different production lines.

The process control apparatus 100 may set a beam steering range of the antenna such that an entire production line is included in the beam steering range of the antenna. For example, the beam steering range of the antenna may be set to horizontal ±60 degrees, vertical ±30 degrees, and a beam width may be set to 10 degrees at a 3DB point. In this case, an 8x8 phased array antenna may be used as the antenna. The processor 110 may initially generate noise and interference signal profiles for the signals of the antenna and perform calibration. In addition, the processor 110 may receive the temperature of the space in which the production line is installed from the sensor 140 and calculate a change in characteristics of the wireless signals by temperature to correct the signal.

The process control apparatus 100 determines each location of the WBMSs 10 moving along the production line and calculates a moving speed thereof (S20).

The processor 110 may determine a location of the WBMS 10 by computing a frequency difference between a transmitted signal (f_t) and a received signal (f_r) for the WBMS 10 and calculating the speed of the WBMS 10 from the Doppler frequency shift.

For example, the processor 110 controls the communication unit 130 to transmit continuous wave (CW) signals of a main frequency and measures the Doppler frequency shift at 100 ms intervals. The process control apparatus 100 may calculate the speed and location of the WBMS 10 from the measured frequency shift. In addition, the processor 110 may verify the calculated speed and location using an auxiliary frequency signal. In this case, the main frequency is about 2.4 GHz and an auxiliary frequency of about 915 MHz may be used to improve obstacle penetration. The processor 110 may set the transmission power of the communication unit 130 to a maximum of 100 Mw and the receiving sensitivity to -100 dBm.

The processor 110 may determine the location of the WBMS 10 as illustrated in the following Equation 1. $\begin{matrix}Δ f = f _ r - f _ t \\ Δ f = 2 νf _ t / c \\ ν = \left(c\times Δf\right) / \left(2f_t\times cos\left(θ\right)\right) \\ x \left(t\right) = \int ν \left(t\right) dt\end{matrix}$

In this case, f_r is the frequency of a received signal, f_t is the frequency of a transmitted signal, C is the speed of light, and 0 is an angle between a direction of module movement and a direction of propagation.

The processor 110 may correct a multipath effect by measuring a channel impulse response (CIR), estimating an angle of arrival (AOA) of a signal using the multiple signal classification (MUSIC) algorithm, and reconstructing a signal using the minimum mean square error estimator (MMSE).

The processor 110 may identify the plurality of WBMSs 11 to 19 using a machine learning-based artificial intelligence model (S30).

For example, the processor 110 may analyze signals based on a deep neural network (DNN) and a long short-term memory (LSTM) network. The processor 110 may use the DNN to distinguish between the master WBMS and the slave WBMS and may use the LSTM to predict the movement of the WBMS 10 over time.

The processor 110 may collect additional data to retrain the artificial intelligence model and then perform classification again when the reliability of a classification result is less than 95%. In this case, the processor 110 may sample and learn about 1 million or more movement patterns of the WBMS 10 to generate the artificial intelligence model for signal analysis and generate a result within about 1 ms based on the model.

The processor 110 controls the WBMS 10 to flash a designated program when the WBMS 10 reaches a designated flashing location. The processor 110 may control the flashing device 170 by tracking the location of the WBMS 10 and predicting that the WBMS 10 reaches a designated location. The processor 110 may transmit a preparation signal to the flashing device 170 about 0.5 seconds before the identified WBMS 10 reaches the flashing location.

The flashing device 170 starts data transmission as RF signals through adaptive beamforming when the WBMS 10 reaches the flashing location. In this case, the data being transmitted is a program to be installed on the WBMS 10. The processor 110 monitors the signal quality in real time during flashing and controls data to be retransmitted when a signal-to-noise ratio (SNR) decreases below 20 db.

The processor 110 may perform adaptive beamforming by computing complex weights w_i for each element of the phased array antenna and maximizing a target signal-to-interference-plus-noise ratio (SINR), expressed as (max(wH R_xx w/ wH R_nn w)). In this case, R_xx is a covariance matrix of the target signal, and R_nn is a covariance matrix of interference and noise.

The processor 110 constructs a predictive model according to WBMS location tracking using a Kalman filter and analyzes the state of the WBMS 10 by monitoring an error between an actual measured value and a predicted value for a location (S50).

The processor 110 may determine that a location prediction error has occurred when the error between the measured value and the predicted value exceeds a threshold value (S60). The processor 110 may determine that an error has occurred when the error is greater than three times a standard deviation. In addition, when there is an error in the predicted location value, the processor 110 may determine that a flashing error has occurred because a program cannot be accurately flashed to the WBMS 10. Thus, when an error occurs, the processor 110 may stop flashing of the corresponding WBMS in operation, separately classify the WBMS, and then perform a retesting process.

The processor 110 stores data on identification information of each WBMS 10, a flashing process, and error occurrences in the memory 120 in real time. In addition, the processor 110 may separately store data in a database (DB). The processor 110 may analyze the entire production data at a regular time interval, for example, every 24 hours, to evaluate the system performance of the manufacturing process and calculate a productivity index.

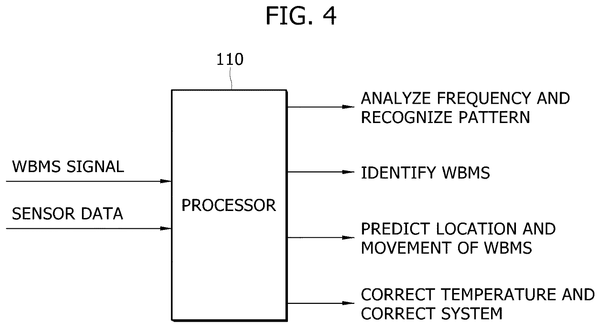

FIG. 4 is a view for describing a process of identifying a WBMS according to embodiments of the present disclosure.

Referring to FIG. 4, the processor 110 may calculate the location and moving speed of the WBMS 10 and predict the movement of the WBMS 10. In addition, the processor 110 may receive sensor data from the sensor 140 to determine the location of the WBMS 10.

The processor 110 may calculate the speed of the WBMS 10 from the Doppler frequency shift using a difference between transmitted signals and received signals based on the Doppler effect, and may track the location by continuously measuring the speed. In this case, the Doppler effect refers to a phenomenon in which an observed frequency of waves changes due to the relative motion between the wave source and an observer. When a stationary transmitter emits electromagnetic waves with a frequency f0, a frequency f observed by a receiver moving with a speed v may be calculated as f = f0 * (1 + v/c).

The processor 110 may transmit a signal using the RF antenna installed on the upper portion of the production line along which the WBMS 10 moves, analyze the frequency of the received signal for the WBMS 10, and recognize a movement pattern of the WBMS 10.

The processor 110 may transmit CW signals in a main frequency band through the communication unit 130, convert and process reflected signals received by a receiving antenna and reflected by the WBMS 10 using a high-speed ADC and a digital signal processor (DSP), and then calculate the location in real time for the plurality of WBMSs using an FPGA.

The processor 110 measures the frequency difference between the received signal and the transmitted signal as in Equation 1 herein and calculates the speed of the WBMS 10 based on the frequency difference. The processor 110 may determine the movement direction of a target WBMS 10 by analyzing a phase difference between elements of the phased array antenna.

In addition, the processor 110 may measure a time delay Δt between the transmitted signal and the received signal. The processor 110 may measure an exact time delay using a pulse modulated signal. The processor 110 may calculate a distance d to the target WBMS 10 using the measured time delay Δt. In this case, the distance may be calculated as d = c * (Δt)/2.

The processor 110 identifies the plurality of WBMSs 11 to 19 located on the production line by comparing the measured speed, movement direction and distance information of the target WBMS 10 with a predefined WBMS profile. In this case, the processor 110 may distinguish the type of WBMS, i.e., master and slave, based on the artificial intelligence model.

In addition, the processor 110 may calculate the location of the WBMS 10 in the same manner using an auxiliary frequency of 915 MHz in addition to the main frequency of 2.4 GHz and verify the previously calculated location by comparing the results.

In this case, the processor 110 applies a fast Fourier transform (FFT) to the received signal to analyze changes in the frequency domain and measure the Doppler frequency shift. In addition, the processor 110 may use the MUSIC algorithm for high-resolution direction finding to determine the direction of a target object by analyzing a phase difference between the elements of a receiving antenna array. The processor 110 may remove noise using a Kalman filter, predict the movement of the target WBMS 10, and improve accuracy by combining the predicted movement of the the target WBMS 10 with actual measurements.

Meanwhile, the processor 110 may automatically adjust threshold values, such as set values, default values, etc., according to the speed of the production line and changes in the surrounding environment. The processor 110 may calculate the false detection rate and the undetected rate and adjust the threshold value based on the false detection rate and the undetected rate. The processor 110 may minimize the interference caused by the multipath of the reflected signal through a time-domain synchronizer using a channel estimation technique. The processor 110 may improve the measurement accuracy by correcting specific changes in the wireless signal due to temperature. The processor 110 may detect abnormalities in real time, and in the event of a flashing error, separate the WBMS 10 to be retested. In addition, the processor 110 may construct a separate backup device so that the process may be controlled through the backup device when an abnormality occurs in the main device.

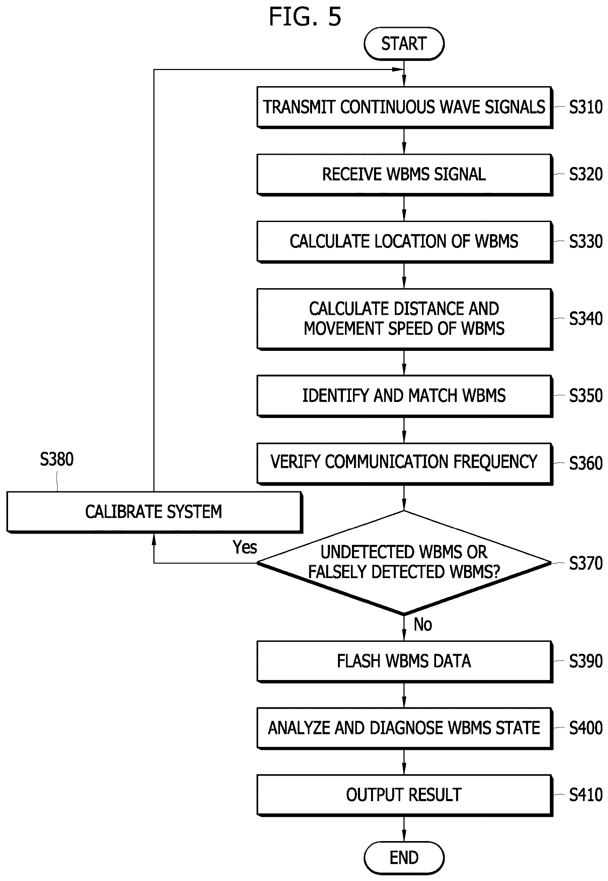

FIG. 5 is a flowchart illustrating a process control method for identifying and tracking a WBMS according to embodiments of the present disclosure.

Referring to FIG. 5, the process control apparatus 100 transmits CW signals of a predetermined frequency via the communication unit 130 (S310) and receives the reflected signal by the WBMS 10 (S320).

The processor 110 may analyze the reflected signal to compute a frequency difference between the transmitted signal and the received signal, and calculate the speed of the WBMS 10 from the Doppler frequency shift to calculate the location of the WBMS 10 (S330). In addition, the processor 110 may calculate a signal delay between the transmitted signal and the received signal and calculate a distance to the WBMS 10 using the signal delay.

The processor 110 may identify the plurality of WBMSs 11 to 19 by matching the speed, movement direction and distance information of the WBMS 10 with a predefined profile of the WBMS 10 (S350). In this case, the processor 110 may classify the master WBMS and the slave WBMS based on the DNN and may predict the movement of the WBMS 10 based on the LSTM.

The processor 110 may determine and identify the location of the WBMS using signals of a main frequency and then verify the result using signals of an auxiliary frequency (S360).

The processor 110 calculates the undetected rate and the false detection rate when there are undetected WBMSs or falsely detected WBMSs among the plurality of WBMSs 11 to 19 (S370), and may correct the system when the value of the undetected rate and/or the false detection rate exceeds a predetermined reference value (S380). The processor 110 may correct the signal in consideration of the change in characteristics of the wireless signal by temperature in response to the temperature measured by the sensor 140. The processor 110 may change the threshold values set for WBMS detection according to the speed of the production line. In addition, the processor 110 may correct the effects of multipath interference on the reflected signal using the channel estimation technique.

The processor 110 predicts the location of the WBMS 10 and flashes a program to the WBMS 10 when a designated flashing location is reached (S390). The processor 110 transmits a preparation signal to the flashing device 170 before reaching the flashing location, thereby controlling flashing to be performed when the WBMS 10 reaches the flashing location.

During flashing, the processor 110 calculates an error between a predicted location value and the measured value of the WBMS 10 to analyzes the state of the WBMS 10, and determines that a flashing error has occurred when the error is greater than or equal to the set value (S400). That is, the processor 110 may determine that some data was not flashed because the designated flashing location was not reached at the correct time due to the error in a predicted location value.

The processor 110 may stop flashing for a WBMS in which a flashing error occurred and may separately classify and retest the WBMS.

The processor 110 stores data on the identification information of each WBMS 10, a flashing process, and error occurrences in real time, and periodically stores data on the manufacturing process to evaluate the performance of the system and calculate a productivity index.

The processor 110 may output identification information of the WBMS 10 and a flashing result through the output unit 180 (S410). In addition, the processor 110 may also output the calculated performance evaluation and the productivity index.

As described herein, according to the present disclosure, during a process of manufacturing a battery pack, the location and moving speed of a WBMS mounted on the battery pack may be effectively tracked in real time by utilizing the Doppler effect, and the WBMS may be accurately identified.

In addition, according to the present disclosure, a WBMS may be accurately identified to distinguish between a master WBMS and a slave WBMS, and the master WBMS and the slave WBMS may be paired.

In addition, according to the present disclosure, a WBMS may be accurately identified and a program may be flashed accurately and reliably according to a type thereof.

In addition, according to the present disclosure, a flashing error of a WBMS may be detected during the manufacturing process to reduce the defect rate and improve the manufacturing quality of the WBMS.

The implementations described herein may be implemented, for example, as a method or process, an apparatus, a software program, a data stream or a signal. Even when discussed in the context of a single form of implementation (e.g., discussed only as a method), the implementation of the discussed features may also be implemented in other forms (e.g., as an apparatus or a program). The apparatus may be implemented using suitable hardware, software, firmware, and the like. The method may be implemented in an apparatus such as the processor, which generally refers to a processing device including, for example, a computer, a microprocessor, an integrated circuit, or a programmable logic device. The processor also includes a communication device such as a computer, a cell phone, a personal digital assistant (PDA), and other devices that facilitate communication of information between end-users.

According to the present disclosure, during a process of manufacturing a battery pack, the location and moving speed of a WBMS mounted on the battery pack can be effectively tracked in real time by utilizing the Doppler effect, and the WBMS can be accurately identified.

In addition, according to the present disclosure, a WBMS can be accurately identified to distinguish between a master WBMS and a slave WBMS, and the master WBMS and the slave WBMS can be paired.

In addition, according to the present disclosure, a WBMS can be accurately identified and a program can be flashed accurately and reliably according to a type thereof.

In addition, according to the present disclosure, a flashing error of a WBMS can be detected during the manufacturing process to reduce the defect rate and improve the manufacturing quality of the WBMS.

However, effects that can be achieved through the present disclosure are not limited to the herein-described effects and other effects that are not described may be clearly understood by those skilled in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims.

## Claims

1. A battery pack process control apparatus comprising:
a communication unit (130) configured to transmit and receive signals for detecting a wireless battery management system, WBMS, (10) moving along a production line; and
a processor (110) configured to detect the WBMS (10) based on the transmitted signal and received signal of the communication unit (130), determine a location and speed of the WBMS (10), identify and track the WBMS (10) in real time, and to control a designated program to be flashed to the WBMS (10) when the WBMS (10) reaches a designated flashing location.

2. The battery pack process control apparatus of claim 1, wherein the processor (110) is configured to calculate the speed of the WBMS (10) based on a frequency difference between the transmitted signal and the received signal using the Doppler effect and to calculate the location of the WBMS (10) based on the speed.

3. The battery pack process control apparatus of claim 2, wherein the processor (110) is configured to calculate a distance to the WBMS (10) by computing a time delay between the transmitted signal and the received signal, and to identify the WBMS (10) by matching the speed, the distance, and a direction of the WBMS (10) with a pre-stored profile.

4. The battery pack process control apparatus of claim 1, 2 or 3, wherein the processor (110) is configured to analyze the received signal based on an artificial intelligence model to classify the WBMS (10) as either a master WBMS (10) or a slave WBMS (10) and to predict the movement of the WBMS (10).

5. The battery pack process control apparatus of claim 4, wherein the processor (110) is configured to classify a type of the WBMS (10) using a deep neural network, DNN, and to predict the movement of the WBMS (10) based on a long short-term memory, LSTM, network.

6. The battery pack process control apparatus of any one of claims 1 to 5, wherein the processor (110) is configured to transmit a preparation signal to a flashing device to prepare for flashing before the WBMS (10) reaches the designated flashing location so that the program is flashed to the WBMS (10) when the WBMS (10) reaches the flashing location.

7. The battery pack process control apparatus of any one of claims 1 to 6, wherein the processor (110) is configured to compare a predicted value and a measured value for the location of the WBMS (10) to calculate an error and determines that a flashing error has occurred in the WBMS (10) when the error is greater than or equal to a set value, and optionally
wherein the processor (110) is configured to stop the flashing when the WBMS (10) is determined to have an error and separately classifies and retests the WBMS (10).

8. The battery pack process control apparatus of any one of claims 1 to 7, wherein:
the processor (110) is configured to count a number of undetected WBMSs (10) and falsely detected WBMSs (10) among a plurality of WBMSs (10) and to calculate an undetected rate and a false detection rate; and
a setting of a manufacturing process including the production line is changed when one or more of the undetected rate and the false detection rate exceed a reference value.

9. The battery pack process control apparatus of claim 8, wherein the processor (110) is configured to correct one or more of a change in characteristics of a wireless signal including, temperature, threshold values referenced for detecting the WBMS (10) based on a speed of the production line, electromagnetic interference, and multipath interference of the received signal.

10. The battery pack process control apparatus of any one of claims 1 to 9, wherein the processor (110) is configured to store data on identification information of the WBMS (10), a flashing process, and occurrence of an error in real time, and to periodically store data on a manufacturing process to evaluate performance of a system and to calculate a productivity index to manage the manufacturing process.

11. A battery pack process control method comprising:
controlling, by a processor (110), a communication unit (130) to transmit and receive signals to detect a wireless battery management system, WBMS (10), moving along a production line;
determining, by the processor (110), a location and speed of the WBMS (10) by detecting the WBMS (10) based on the transmitted signal and the received signal;
identifying and tracking, by the processor (110), the WBMS (10) in real time; and
controlling, by the processor (110), a designated program to be flashed to the WBMS (10) when the WBMS (10) reaches a designated flashing location.

12. The battery pack process control method of claim 11, wherein, in the determining of the location and speed of the WBMS (10), the processor (110) calculates the speed of the WBMS (10) based on a frequency difference between the transmitted signal and the received signal using the Doppler effect and calculates the location of the WBMS (10) based on the speed, and optionally
wherein, in the identifying and tracking of the WBMS (10) in real time, the processor (110) calculates a distance to the WBMS (10) by computing a time delay between the transmitted signal and the received signal and identifies the WBMS (10) by matching the speed, the distance, and a direction of the WBMS (10) with a pre-stored profile.

13. The battery pack process control method of claim 11 or 12, wherein, in the identifying and tracking of the WBMS (10) in real time, the processor (110) analyzes the received signal based on an artificial intelligence model to classify the WBMS (10) as either a master WBMS (10) or a slave WBMS (10), and predicts the movement of the WBMS (10).

14. The battery pack process control method of claim 11, 12 or 13, wherein, in the controlling of the designated program to be flashed to the WBMS (10), the processor (110) transmits a preparation signal to a flashing device to prepare for flashing before the WBMS (10) reaches the designated flashing location, and controls a signal to be transmitted through the communication unit (130) when the WBMS (10) reaches the flashing location.

15. The battery pack process control method of any one of claims 11 to 14, further comprising:
comparing, by the processor (110), a predicted value and a measured value for the location of the WBMS (10) and calculating an error;
determining, by the processor (110), that a flashing error has occurred in the WBMS (10) when the error is greater than or equal to a set value; and
stopping, by the processor (110), the flashing when the WBMS (10) is determined to have an error and separately classifying and retesting the WBMS (10).
